# EUROPEAN PATENT APPLICATION

(11) **EP 4 318 419 A1**
(43) Date of publication of application: **07.02.2024**
(21) Application number: 22795687.7
(22) Date of filing: 22.04.2022
(51) Int. Cl.: G07D 7/12, G07D 11/40

(54) **PAPER SHEET PROCESSING METHOD AND PAPER SHEET PROCESSING DEVICE**

(30) Priority: 30.04.2021 JP 2021077858
(71) Applicant: GLORY LTD., Himeji-shi Hyogo 670-8567 (JP)
(72) Inventor: KOBAYASHI, Kiyoaki, Himeji-shi, Hyogo 670-8567 (JP)
(74) Representative: Isarpatent
(86) International application number: PCT/JP2022/018585
(87) International publication number: WO 2022/230774

(57) **Abstract**

A paper sheet processing method that is to be employed by a paper sheet processing device. The paper sheet processing method involves acquiring image information for a paper sheet, transmitting the acquired image information to an external character recognition device, receiving the results of character recognition by the character recognition device from the character recognition device, and using the results of the character recognition by the character recognition device to process the paper sheet.

## Description

### Technical Field

The present disclosure relates to a sheet processing apparatus and a sheet processing method.

### Background Art

Conventionally, a banknote processing machine that performs banknote deposit/withdrawal processing is known (see, for example, Patent Literature (hereinafter, referred to as PTL) 1). A banknote managing system of PTL 1 comprises a banknote processing apparatus and a banknote managing apparatus. The banknote managing apparatus receives a banknote image from the banknote processing apparatus. The banknote managing apparatus identifies the serial number by using the received banknote image, and registers the identified serial number in the database of the banknote managing apparatus.

### Citation List

### Patent Literature

PTL 1
Japanese Patent No. 5512527

### Summary of Invention

### Technical Problem

In the banknote managing system of PTL 1, however, the serial number information identified by the banknote managing apparatus is only managed in the database of the banknote managing apparatus, and is not transmitted to the banknote processing apparatus thus is not used for processing in the banknote processing apparatus. Therefore, the effective utilization of the serial number information identified by the banknote managing apparatus is not possible.

The present disclosure solves the above problems. An object of the present disclosure is to provide a sheet processing method and a sheet processing apparatus both capable of executing processing related to sheets by effectively utilizing results of character recognition in an external character recognition apparatus.

### Solution to Problem

A sheet processing method according to the present disclosure is a sheet processing method performed in a sheet processing apparatus and comprises: acquiring image information of a sheet; transmitting the image information acquired to a character recognition apparatus outside the sheet processing apparatus, and receiving a result of character recognition performed by the character recognition apparatus from the character recognition apparatus; and performing processing on the sheet by using the result of the character recognition performed by the character recognition apparatus.

The sheet processing method according to the present disclosure may further comprise performing the character recognition in the sheet processing apparatus by using the image information, in which the processing on the sheet is optionally performed by using a result of the character recognition performed by the sheet processing apparatus.

The sheet processing method according to the present disclosure may further comprise performing authenticity determination on the sheet, in which when the sheet is determined to be counterfeit as a result of the authenticity determination, the processing is performed by using the result of the character recognition performed by the character recognition apparatus.

The sheet processing method according to the present disclosure may further comprise: when the sheet is determined to be counterfeit as the result of the authenticity determination, storing the sheet in a counterfeit note storage unit; and generating transaction specific information of the sheet, associating the transaction specific information generated and the result of the character recognition acquired from the character recognition apparatus, and storing the associated transaction specific information and the result of the character recognition in a memory unit, the transaction specific information corresponding to the image information.

In the sheet processing method according to the present disclosure, when a character recognition rate of the character recognition in the sheet processing apparatus is less than a threshold, the processing may be performed by using the result of the character recognition performed by the character recognition apparatus; and when the character recognition rate is equal to or more than the threshold, the processing on the sheet may be performed by using the result of the character recognition performed by the sheet processing apparatus.

The sheet processing method according to the present disclosure may further comprise: when the character recognition rate of the character recognition in the sheet processing apparatus is less than the threshold, storing the sheet in a counterfeit note storage unit; and generating transaction specific information of the sheet, associating the transaction specific information generated and the result of the character recognition acquired from the character recognition apparatus, and storing the associated transaction specific information and the result of the character recognition in a memory unit, the transaction specific information corresponding to the image information.

The sheet processing method according to the present disclosure may further comprise: associating the transaction specific information stored in the memory unit and the result of the character recognition acquired from the character recognition apparatus and printing or displaying the associated transaction specific information and the result of the character recognition on a display.

The sheet processing method according to the present disclosure may further comprise: selecting one of the result of the character recognition performed by the sheet processing apparatus and the result of the character recognition performed by the character recognition apparatus, in which the processing is performed by using the result of the character recognition selected.

The sheet processing method according to the present disclosure may further comprise: when processing speed is prioritized, selecting the result of the character recognition performed by the sheet processing apparatus, and when processing accuracy is prioritized, selecting the result of the character recognition performed by the character recognition apparatus.

The sheet processing method according to the present disclosure may further comprise: during performing of deposit processing, transmitting the image information of the sheet to the character recognition apparatus, and transporting the sheet according to the result of the character recognition performed by the character recognition apparatus.

The sheet processing method according to the present disclosure may further comprise: holding the sheet in a temporary holding unit; when a character recognition rate of the character recognition apparatus is equal to or more than a threshold, transporting the sheet from the temporary holding unit to a recycling storage unit; and when the character recognition rate is less than the threshold, transporting the sheet from the temporary holding unit to a collection unit or a reject unit.

The sheet processing method according to the present disclosure may further comprise: during performing of reconciliation processing, performing the character recognition of the sheet in the sheet processing apparatus, and collating the result of the character recognition performed by the sheet processing apparatus with the result of the character recognition performed during the deposit processing by the character recognition apparatus.

A sheet processing apparatus according to the present disclosure comprises: an imaging unit that acquires image information of a sheet; a transmission/reception unit that transmits the image information acquired to a character recognition apparatus outside the sheet processing apparatus, and receives a result of character recognition performed by the character recognition apparatus from the character recognition apparatus; and a control unit that performs processing on the sheet by using the result of the character recognition performed by the character recognition apparatus.

The sheet processing apparatus according to the present disclosure may further comprise: a character recognition unit that performs the character recognition on the sheet, in which the control unit optionally performs processing on the sheet by using a result of the character recognition performed by the character recognition unit by using the image information.

The sheet processing apparatus according to the present disclosure may further comprise: an authenticity determination unit that performs authenticity determination of the sheet, in which when the sheet is determined to be counterfeit as a result of the authenticity determination of the authenticity determination unit, the control unit performs the processing by using the result of the character recognition performed by the character recognition apparatus.

In the sheet processing apparatus according to the present disclosure, when a character recognition rate of the character recognition unit is less than a threshold, the control unit may perform the processing by using the result of the character recognition performed by the character recognition apparatus.

In the sheet processing apparatus according to the present disclosure, the control unit may receive an instruction to select the result of the character recognition performed by the character recognition unit or to select the result of the character recognition performed by the character recognition apparatus, and performs the processing by using the result based on the instruction received.

In the sheet processing apparatus according to the present disclosure, an instruction to select processing that prioritizes processing speed may be received as an instruction to select the result of the character recognition performed by the character recognition unit or an instruction to select processing that prioritizes processing accuracy may be received as an instruction to select the result of the character recognition performed by the character recognition apparatus.

### Advantageous Effects of Invention

The present disclosure can provide a sheet processing method and a sheet processing apparatus both capable of executing processing related to sheets by effectively utilizing results of character recognition in an external character recognition apparatus.

### Brief Description of Drawings

FIG. 1 is a block diagram illustrating a schematic configuration of a banknote processing system according to Embodiment 1;
FIG. 2 is a flow chart illustrating the operation of the banknote processing system according to Embodiment 1;
FIG. 3 is a block diagram illustrating a schematic configuration of a banknote processing system according to Embodiment 2;
FIG. 4 is a flow chart illustrating the operation of the banknote processing system according to Embodiment 2;
FIG. 5 is a schematic diagram illustrating a schematic configuration of a banknote processing system according to Embodiments 3 to 5;
FIG. 6 is a schematic diagram illustrating a schematic configuration of a counterfeit note list according to Embodiment 3;
FIG. 7 is a schematic diagram illustrating an exemplary receipt according to Embodiment 3;
FIG. 8 is a flowchart illustrating deposit processing of the banknote processing system according to Embodiment 3;
FIG. 9 is a schematic diagram illustrating a schematic configuration of a counterfeit note list according to Embodiment 4;
FIG. 10 is a flowchart illustrating deposit processing of the banknote processing system according to Embodiment 4;
FIG. 11 is a schematic diagram illustrating an exemplary receipt according to Embodiment 4;
FIG. 12 is a schematic diagram illustrating a schematic configuration of a serial number list according to Embodiment 5;
FIG. 13 is a flowchart illustrating deposit processing of the banknote processing system according to Embodiment 5; and
FIG. 14 is a flowchart illustrating the deposit processing of the banknote processing system according to Embodiment 5.

### Description of Embodiment

### Embodiment 1

Embodiment 1 will be described with reference to the drawings.

### Configuration of Banknote Processing System

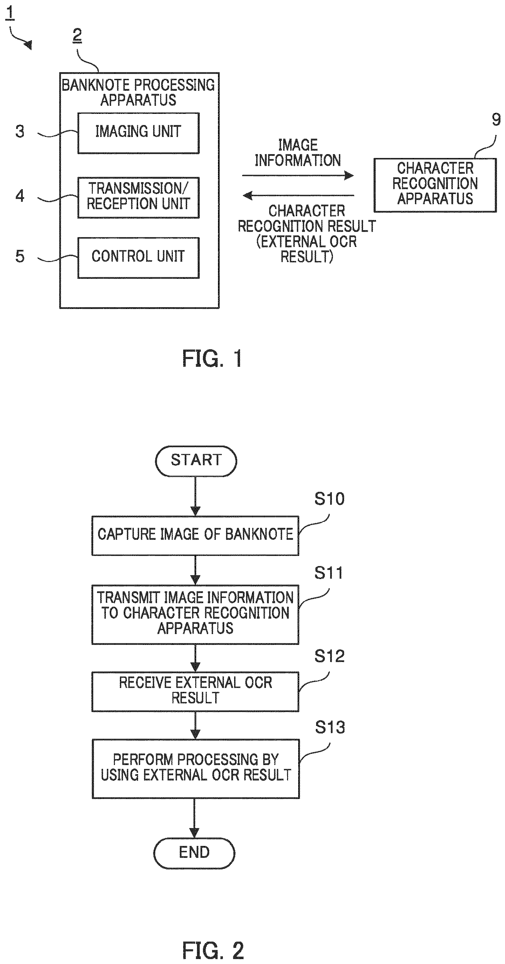

First, the configuration of a banknote processing system will be described. FIG. 1 is a block diagram illustrating a schematic configuration of a banknote processing system according to Embodiment 1. In Embodiment 1 and below described Embodiment 2 to 5, a banknote processing system that performs processing related to at least one banknote, which is an exemplary sheet, will be described.

As illustrated in FIG. 1, a banknote processing system 1 comprises a banknote processing apparatus 2 and a character recognition apparatus 9. The banknote processing apparatus 2 is an exemplary sheet processing apparatus.

The banknote processing apparatus 2 comprises an imaging unit 3, a transmission/reception unit 4, and a control unit 5.

The imaging unit 3 is disposed in the transport path of the banknotes to be received by the banknote processing apparatus 2, and acquires image information of the banknotes by capturing images of the banknotes. The image information indicates a reflected image of a banknote, and comprises at least the image of the serial number of the banknote, or may comprise the image of the entire banknote.

The transmission/reception unit 4 is communicably connected to a character recognition apparatus 9 (external character recognition apparatus) outside the banknote processing apparatus 2 via a wired medium or a wireless medium. The transmission/reception unit 4 transmits the image information acquired by the imaging unit 3 to the character recognition apparatus 9. The image information transmitted to the character recognition apparatus 9 is used for character recognition of the serial number of the banknote in the character recognition apparatus 9. The transmission/reception unit 4 receives the result of character recognition performed by the character recognition apparatus 9. Hereinafter, character recognition performed by the character recognition apparatus 9 may be referred to as "external optical character recognition (OCR)."

The control unit 5 controls the entire banknote processing apparatus 2. The control unit 5 acquires a result of the external OCR (herein also simply referred to as "external OCR result") of the serial number performed by the character recognition apparatus 9, and uses the external OCR result to perform processing related to the banknote.

The character recognition apparatus 9 executes external OCR by using image information and transmits the external OCR result to the banknote processing apparatus 2 as described above. A well-known character recognition method can be applied as the external OCR method.

The banknote processing apparatus 2 may have a character recognition function. In this case, for performing character recognition on a plurality of banknotes (received by the banknote processing apparatus 2) in the banknote processing apparatus 2, it is necessary to perform the character recognition on a banknote being transported. On the other hand, the character recognition apparatus 9 performs external OCR by using image information independently of the processing in the banknote processing apparatus 2. Therefore, the character recognition apparatus 9 can perform the external OCR with higher accuracy than when character recognition is performed on a banknote being transported.

### Operation of Banknote Processing System

In the following, the operation of the banknote processing system will be described. FIG. 2 is a flow chart illustrating the operation of the banknote processing system according to Embodiment 1.

As illustrated in FIG. 2, the imaging unit 3 of the banknote processing apparatus 2 captures an image of a banknote and acquires the image information thereof (step S10). The banknote whose image is captured by the imaging unit 3 may be stored in a storage unit configured to store banknotes which can be taken out of the banknote processing apparatus 2 by a person in charge of collection and delivery, and the like. The banknote whose image is captured by the imaging unit 3 may be stored in a storage unit configured to store banknotes and feed out the stored banknotes for recycling. Next, the transmission/reception unit 4 transmits the image information to the character recognition apparatus 9 (step S11). After that, the transmission/reception unit 4 receives the external OCR result from the character recognition apparatus 9 (step S12). Subsequently, the control unit 5 uses the external OCR result to perform processing related to the banknote on which the external OCR has been performed (step S 13). Examples of the processing related to a banknote using an external OCR result include processing of storing the external OCR result in a memory unit, processing of printing the external OCR result, and processing of displaying the external OCR result on a display.

### Effects of Embodiment 1

In the following, the effects of Embodiment 1 will be described. The banknote processing apparatus 2 transmits image information of a banknote to the character recognition apparatus 9 and receives an external OCR result performed by the character recognition apparatus 9. The banknote processing apparatus 2 uses the external OCR result to perform processing related to the banknote. Therefore, the banknote processing apparatus 2 can effectively utilize external OCR results to perform processing related to banknotes. In addition, the banknote processing apparatus 2 can obtain highly accurate external OCR results from the character recognition apparatus 9, and can more appropriately perform processing related to banknotes.

With the use of a high-performance computer for the character recognition apparatus 9, the banknote processing apparatus 2 can obtain an external OCR result with higher accuracy, and can perform processing related to a banknote more appropriately. For performing external OCR that uses a template, only the template of the character recognition apparatus 9 needs to be updated, so that the accuracy of the external OCR can be easily improved. The recognition result of the serial number of a banknote can be obtained without disposing a character recognition unit in the banknote processing apparatus 2.

### Embodiment 2

In the following, Embodiment 2 will be described with reference to the drawings.

### Configuration of Banknote Processing System

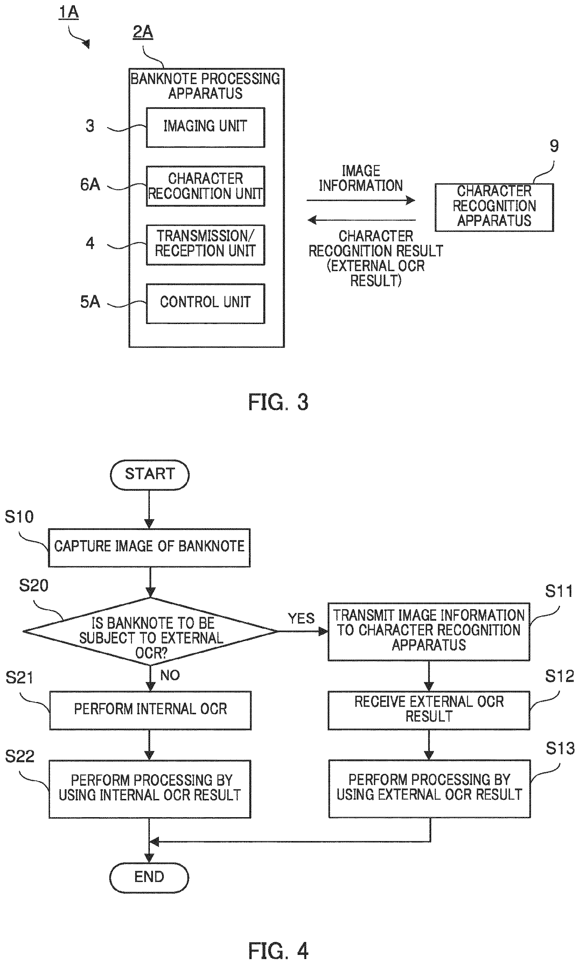

First, the configuration of a banknote processing system will be described. FIG. 3 is a block diagram illustrating a schematic configuration of a banknote processing system according to Embodiment 2.

A banknote processing system 1A illustrated in FIG. 3 differs from to the banknote processing system 1 of Embodiment 1 in that a banknote processing apparatus 2A comprises a character recognition unit 6A, and a control unit 5A performs different processing from the control unit 5. The rest of the configuration of the banknote processing system 1A is the same as that of the banknote processing system 1 of Embodiment 1.

The character recognition unit 6A uses image information acquired by the imaging unit 3 to identify the serial number of a banknote. As described in Embodiment 1, the imaging unit 3 is disposed in the transport path, and character recognition is performed while a banknote is transported. Therefore, the accuracy of character recognition performed by the character recognition unit 6A is more likely to become lower than that of the external OCR performed by the character recognition apparatus 9. Hereinafter, character recognition performed by the character recognition unit 6A may be referred to as "internal OCR."

The control unit 5A selectively uses the result of internal OCR performed by the character recognition unit 6A or the result of external OCR performed by the character recognition apparatus 9, thereby performing different processing on a banknote.

### Operation of Banknote Processing System

In the following, the operation of the banknote processing system will be described. FIG. 4 is a flow chart illustrating the operation of the banknote processing system according to Embodiment 2. The same reference numerals are assigned to the same operations as in Embodiment 1, which will be briefly described.

First, as illustrated in FIG. 4, when the imaging unit 3 acquires the image information of a banknote (step S 10), the control unit 5A determines whether the banknote, whose image is captured in step S10, is a banknote to be subjected to the external OCR (step S20). In this step S20, for example, when a banknote is determined to be a counterfeit note by an authenticity determination unit disposed upstream from the imaging unit 3 on the transport path, the control unit 5A may determine that the banknote is a banknote to be subjected to the external OCR. Alternatively, the control unit 5A may determine that a banknote is a banknote to be subjected to the external OCR based on another predetermined criterion. Examples of the other predetermined criteria include the following: type of processing performed by the banknote processing apparatus 2A (for example, a banknote in the case of deposit processing is a banknote to be subjected to the external OCR, and a banknote in the case of withdrawal processing or reconciliation processing is a banknote to be subjected to the internal OCR); and how easily the character recognition based on the degree of wrinkles or stains on a banknote can be performed (for example, when the number of wrinkles is more than a predetermined amount or when a banknote is dirtier than a reference, the banknote is a banknote to be subjected to the external OCR, and when the number of wrinkles is less than a predetermined amount or when a banknote is not dirtier than the reference, the banknote is a banknote to be subjected to the internal OCR). When the control unit 5A determines that a banknote is to be subjected to the external OCR (step S20: YES), the banknote processing apparatus 2A performs processing of transmitting image information to the character recognition apparatus 9 (step S11), processing of receiving an external OCR result from the character recognition apparatus 9 (step S 12), and processing related to the banknote using the external OCR result (Step S13). Examples of the processing related to a banknote using an external OCR result include processing of storing the external OCR result in a memory unit, processing of printing the external OCR result, and processing of displaying the external OCR result on a display. The processing illustrated in Embodiment 1 can be applied.

On the other hand, when the control unit 5A determines that a banknote is to be subjected to the internal OCR (step S20: NO), the character recognition unit 6A uses the image information acquired in step S10 to perform internal OCR (step S21). Subsequently, the control unit 5A uses the internal OCR result to perform processing related to the banknote on which the external OCR has been performed (step S22). The processing related to a banknote using an internal OCR result differs from the processing related to a banknote using an external OCR result, and examples thereof include processing of storing a serial number list (in which the internal OCR results are listed) into the memory unit. In addition, as the processing related to a banknote using an internal OCR result, processing of printing the internal OCR result and processing of displaying the internal OCR result on a display (the same processing as the processing related to a banknote using an external OCR result) may be applied.

### Effects of Embodiment 2

Embodiment 2 has the following effects in addition to the same effects as those of Embodiment 1. The banknote processing apparatus 2A uses an internal OCR result or an external OCR result to perform different processing on a banknote. Therefore, the banknote processing apparatus 2A can perform appropriate processing for each of banknotes to be processed based on the result of character recognition with required accuracy and required processing speed according to each banknote.

### Embodiment 3

In the following, Embodiment 3 will be described with reference to the drawings.

### Configuration of Banknote Processing System

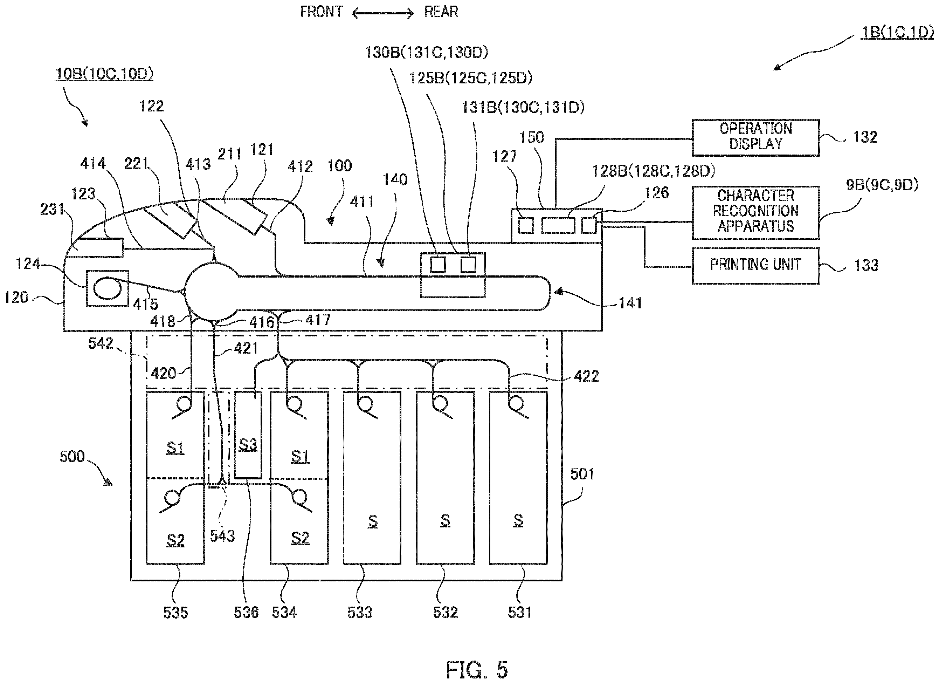

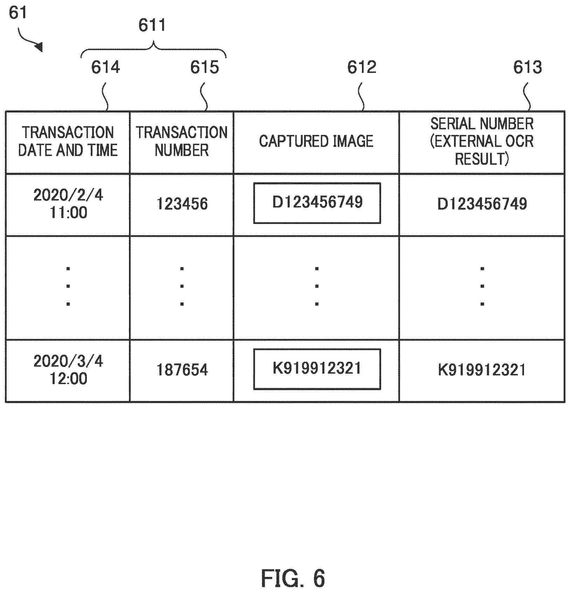

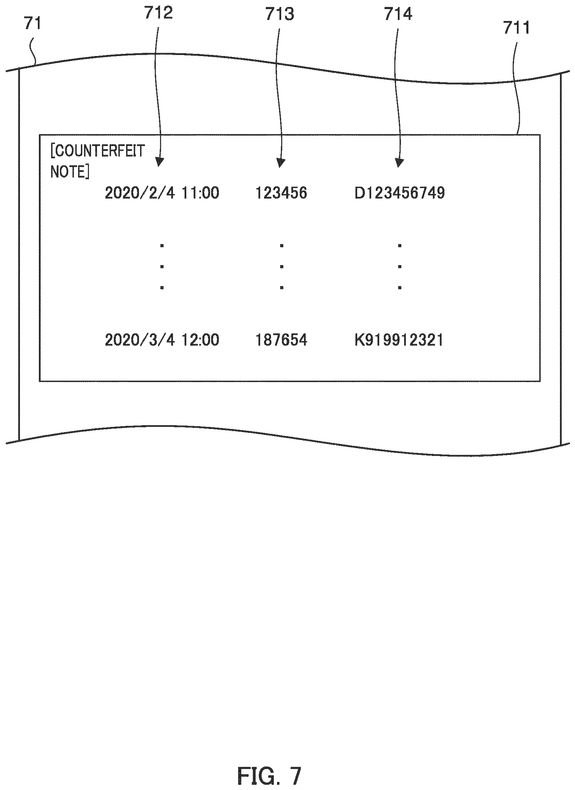

First, the configuration of a banknote processing system will be described. FIG. 5 is a schematic diagram illustrating a schematic configuration of a banknote processing system according to Embodiments 3 to 5. FIG. 6 is a schematic diagram illustrating a schematic configuration of a counterfeit note list according to Embodiment 3. FIG. 7 is a schematic diagram illustrating an exemplary receipt according to Embodiment 3.

In a banknote processing system 1B illustrated in FIG. 5, a banknote processing apparatus 10B includes a recognition section 130B for performing authenticity determination, and is connected to an external character recognition apparatus 9B. The banknote processing system 1B determines the authenticity of a banknote deposited in the banknote processing apparatus 10B, and uses the image information of a banknote determined to be counterfeit to perform external OCR in the character recognition apparatus 9B. Then, the banknote processing system 1B uses the banknote processing apparatus 10B to perform the processing related to the banknote using an external OCR result. Banknotes determined to be counterfeit in the authenticity determination include not only banknotes that are not genuine notes, but also genuine notes that are suspected to be counterfeit.

The banknote processing apparatus 10B comprises a processing unit 100 on the upper side and a safe unit 500 on the lower side. The processing unit 100 comprises an upper housing 120, a deposit unit 121 disposed inside the upper housing 120, a withdrawal unit 122, a reject unit 123, a temporary holding unit 124, an recognition unit 125B, an upper transport unit 141, and a terminal computer 150.

The safe unit 500 comprises a safe housing 501 and a plurality of storage devices 531 to 536, a lower transport unit 542, and a second lower transport unit 543, which are housed in the safe housing 501.

The deposit unit 121 is a part into which a banknote to be deposited is fed, for example, during deposit processing. The deposit unit 121 may also be a part into which a banknote to be counted is fed during counting processing. The deposit unit 121 comprises an inlet 211. The inlet 211 opens upward in the front part of the upper housing 120. An operator manually feeds a banknote into the deposit unit 121 through the inlet 211. The deposit unit 121 comprises a mechanism for taking in banknotes one by one into the banknote processing apparatus 10B.

The withdrawal unit 122 is a part to which banknotes fed out from the storage devices 531 to 535 are transported during, for example, withdrawal processing. In addition, the withdrawal unit 122 is also used as a part to which a rejected banknote generated during deposit processing is transported. Further, the withdrawal unit 122 is also used as a part to which a normal banknote counted during counting processing is transported. The withdrawal unit 122 can hold a plurality of banknotes in a stacked state. The withdrawal unit 122 comprises an outlet 221. The outlet 221 opens upward at a position closer to the front than the inlet 211 is. An operator can manually take out banknotes stacked in the withdrawal unit 122 through the outlet 221.

The reject unit 123 is a part to which a rejected banknote generated during, for example, counting processing is transported. The reject unit 123 is disposed in the front part inside the upper housing 120. The reject unit 123 is configured to hold a plurality of banknotes in a stacked state. The reject unit 123 comprises a second outlet 231. The second outlet 231 opens forward in the front part of the upper housing 120.

The temporary holding unit 124 temporarily stores a banknote to be deposited, for example, during deposit processing. The temporary holding unit 124 can feed out a stored banknote. The temporary holding unit 124 is a tape-type storage unit. The temporary holding unit 124 stores a banknote by winding the banknote around a drum together with the tape.

The recognition unit 125B is disposed on the first transport path 411. The recognition unit 125B comprises a recognition section 130B and an imaging section 131B.

The recognition section 130B has a function as an authenticity determination unit for determining the authenticity of a banknote transported along the first transport path 411 by detecting the security portion of the banknote with a sensor. The following method may be applied as a method of determining authenticity in the recognition section 130B: the imaging section 131B is configured to acquire a transmission image of a banknote, and authenticity is determined based on the presence/absence of a watermark on the banknote in the transmission image. The recognition section 130B recognizes the denomination and fitness of a banknote by using a well-known method. The recognition section 130B transmits the authenticity determination result, denomination and fitness recognition results to a control section 128B.

Under the control of the control section 128B, the imaging section 131B captures the image of a banknote determined to be counterfeit by the recognition section 130B, and acquires image information indicating a reflected image of one side of the banknote. The image information is transmitted to the character recognition apparatus 9B.

The terminal computer 150 comprises a transmission/reception section 126, a memory section 127, and the control section 128B.

The transmission/reception section 126 is connected to the character recognition apparatus 9B via a wired medium or a wireless medium. The transmission/reception section 126 transmits/receives various information to/from the character recognition apparatus 9B under the control of the control section 128B.

The memory section 127 stores programs to be executed by control section 128B. The memory section 127 stores the counterfeit note list 61 illustrated in FIG. 6. The counterfeit note list 61 is generated by the control section 128B. In the counterfeit note list 61, transaction specific information 611 of banknotes stored in the below-described counterfeit note storage unit S3, captured images 612, and external OCR results 613 are associated with each other. The transaction specific information 611 includes transaction date and time 614 and a transaction number 615. The transaction date and time 614 represents the date and time when a banknote was subjected to transaction, for example, the date and time when the banknote was taken into the banknote processing apparatus 10B. The transaction number 615 is a number unique to the transaction, and is set based on preset criteria, for example. The captured image 612 is generated by the control section 128B by using the image information acquired by the imaging unit 3. The captured image 612 is an image including a part where the serial number is written, and is used for external OCR in the character recognition apparatus 9B. The external OCR result 613 represents the result of external OCR in the character recognition apparatus 9B.

The control section 128B controls the entire banknote processing apparatus 10B. Specific processing by the control section 128B will be described below.

An operation display 132 is connected to the terminal computer 150. The operation display 132 is configured with a touch panel type display device, and functions as an operation unit for inputting information related to banknote processing in the banknote processing apparatus 10B, and a display for displaying information related to the banknote processing. The operation display 132 may be configured separately from the terminal computer 150 or may be configured integrally with the terminal computer 150. The operation display 132 may have a configuration such that an operation unit and a display are provided independently.

A printing unit 133 is connected to the terminal computer 150. The printing unit 133 prints information related to banknote processing under the control of the control section 128B. The printing unit 133 prints a receipt 71 as illustrated in FIG. 7. On the receipt 71, collected banknote information related to the denomination, number, and the like of banknotes to be collected, and counterfeit note information 711 are written. The counterfeit note information 711 includes transaction date and time 712, a transaction number 713 and an external OCR result 714, which represent contents corresponding to the transaction date and time 614, the transaction number 615, and the external OCR result 613 of counterfeit note list 61, respectively. The transaction date and time 712, the transaction number 713, and the external OCR result 714 are displayed side by side in one direction (horizontal direction), and are thus configured in such a way that a person in charge of collection and delivery who sees the receipt 71 can easily recognize the transaction date and time 712 and the transaction number 713 of the banknote specified by the external OCR result 714.

The banknote processing apparatus 10B comprises six storage devices 531 to 536. In the following description, these six storage devices may be described as a first storage device 531, a second storage device 532, a third storage device 533, a fourth storage device 534, a fifth storage device 535, and a sixth storage device 536.

The first storage device 531, the second storage device 532, and the third storage device 533 each comprise one recycling storage unit S. The fourth storage device 534 and the fifth storage device 535 each comprise two recycling storage units (a first recycling storage unit S1 and a second recycling storage unit S2).

Banknotes to be recycled are stored in the recycling storage units S, the first recycling storage units S 1, and the second recycling storage units S2. The denominations of banknotes respectively stored in the recycling storage units S, first recycling storage units S 1, and second recycling storage units S2 are set in advance. The recycling storage units S, the first recycling storage units S 1, and the second recycling storage units S2 each comprise a transport mechanism. The transport mechanisms are configured to be able to recycle banknotes by feeding banknotes into the storage devices 531 to 535 from the outside thereof and feeding the banknotes out of the storage devices 531 to 535 to the outside.

The sixth storage device 536 comprises one counterfeit note storage unit S3. The counterfeit note storage unit S3 stores a banknote determined not to be a genuine note. The counterfeit note storage unit S3 does not comprise a transport mechanism as the recycling storage unit S, and thus is configured such that a banknote once stored in the counterfeit note storage unit S3 cannot be recycled. The sixth storage device 536 is configured in such a way that a banknote in the counterfeit note storage unit S3 can be taken out by opening the door of the safe housing 501.

The upper transport unit 141, the lower transport unit 542, and the second lower transport unit 543 constitute a transport unit 140. The transport unit 140 transports the banknotes one by one, with an appropriate interval between the banknotes, within the banknote processing apparatus 10B.

The upper transport unit 141 comprises a first transport path 411, a second transport path 412, a third transport path 413, a fourth transport path 414, a fifth transport path 415, a sixth transport path 416, a seventh transport path 417, and an eighth transport path 418.

Three transport paths are formed in the upper wall that forms the safe housing 501 so as to pass through the upper wall in the vertical direction. These three transport paths are arranged in the front-rear direction. One of the three transport paths connects the sixth transport path 416 with the ninth transport path 421. Another one of the transport paths connects the seventh transport path 417 with the tenth transport path 422. Another one of the transport paths connects the eighth transport path 418 with the eleventh transport path 420.

The first transport path 411 is configured in a loop shape. The transport unit 140 can transport a banknote along the first transport path 411 in the clockwise direction and also in the counterclockwise direction in FIG. 5.

The second transport path 412 connects the deposit unit 121 with the first transport path 411, and transports a banknote from the deposit unit 121 toward the first transport path 411.

The third transport path 413 connects the withdrawal unit 122 with the first transport path 411, and transports a banknote from the first transport path 411 toward the withdrawal unit 122.

The fourth transport path 414 connects the reject unit 123 with the first transport path 411, and transports a banknote from the first transport path 411 toward the reject unit 123.

The fifth transport path 415 connects the temporary holding unit 124 with the first transport path 411, transports a banknote from the first transport path 411 toward the temporary holding unit 124, and also transports a banknote from the temporary holding unit 124 toward the first transport path 411.

The sixth transport path 416 connects the lower transport unit 542 with the first transport path 411, transports a banknote from the first transport path 411 toward the lower transport unit 542, and also transports a banknote from the lower transport unit 542 toward the first transport path 411.

The seventh transport path 417 connects the lower transport unit 542 with the first transport path 411, transports a banknote from the first transport path 411 toward the lower transport unit 542, and also transports a banknote from the lower transport unit 542 toward the first transport path 411.

The lower transport unit 542 comprises the ninth transport path 421, the tenth transport path 422, and the eleventh transport path 420.

The ninth transport path 421 connects the second lower transport unit 543 with the sixth transport path 416, transports a banknote from the sixth transport path 416 toward the second lower transport unit 543, and also transports a banknote from the second lower transport unit 543 toward the sixth transport path 416.

The tenth transport path 422 connects the seventh transport path 417 with the recycling storage units S of the first storage device 531, the recycling storage units S of the second storage device 532, the recycling storage units S of the third storage device 533, the first recycling storage unit S1 of the fourth storage device 534, and the counterfeit note storage unit S3 of the sixth storage device 536. The tenth transport path 422 transports banknotes from the seventh transport path 417 toward storage devices 531 to 534, and 536, and also transports banknotes from storage devices 531 to 534 toward the seventh transport path 417.

The eleventh transport path 420 connects the first recycling storage unit S1 of the fifth storage device 535 with the eighth transport path 418, transports a banknote from the eighth transport path 418 toward the fifth storage device 535, and also transports a banknote from the fifth storage device 535 toward the eighth transport path 418.

The second lower transport unit 543 is branched at a point between the ends thereof and connected to the second recycling storage unit S2 of the fourth storage device 534 and to the second recycling storage unit S2 of the fifth storage device 535. The second lower transport unit 543 transports a banknote from the first transport path 411 toward the second recycling storage unit S2 of the fourth storage device 534, and also transports a banknote from this second recycling storage unit S2 toward the first transport path 411. In addition, the second lower transport unit 543 transports a banknote from the first transport path 411 toward the second recycling storage unit S2 of the fifth storage device 535, and also transports a banknote from this second recycling storage unit S2 toward the first transport path 411.

Each unit of the transport unit 140 is provided with a passage sensor for detecting the passage of a banknote. Upon receiving a command from the control section 128B, the transport unit 140 transports a banknote to a predetermined transport destination based on the detection signal of the passage sensor.

The character recognition apparatus 9B receives the image information of a banknote determined to be counterfeit from the banknote processing apparatus 10B, and uses the image information to perform external OCR. The character recognition apparatus 9B transmits the external OCR result to the banknote processing apparatus 10B. Specific processing of the character recognition apparatus 9B will be described below.

In the proceeding, for performing character recognition in the banknote processing apparatus 10B, it is necessary to perform character recognition on a banknote being transported. In addition, there are cases where the range of character recognition on a banknote is limited. In the case of performing character recognition on a genuine note whose serial number size, font, position, and the like are the same as the predetermined specifications, the character recognition can be performed with high accuracy even when the banknote is being transported and even when the range of character recognition is limited. However, in the case of a counterfeit note whose serial number size, font, position and/or the like differs from the predetermined specifications, highly accurate character recognition cannot be performed when the banknote is being transported or when the range of character recognition is limited in some cases. On the other hand, the character recognition apparatus 9B can perform external OCR by using image information regardless of whether a banknote is being transported or not and without limiting the range of character recognition. Therefore, the character recognition apparatus 9B can perform external OCR with high accuracy even on a counterfeit note.

### Operation of Banknote Processing System

In the following, the operation of the banknote processing system will be described.

### Deposit Processing

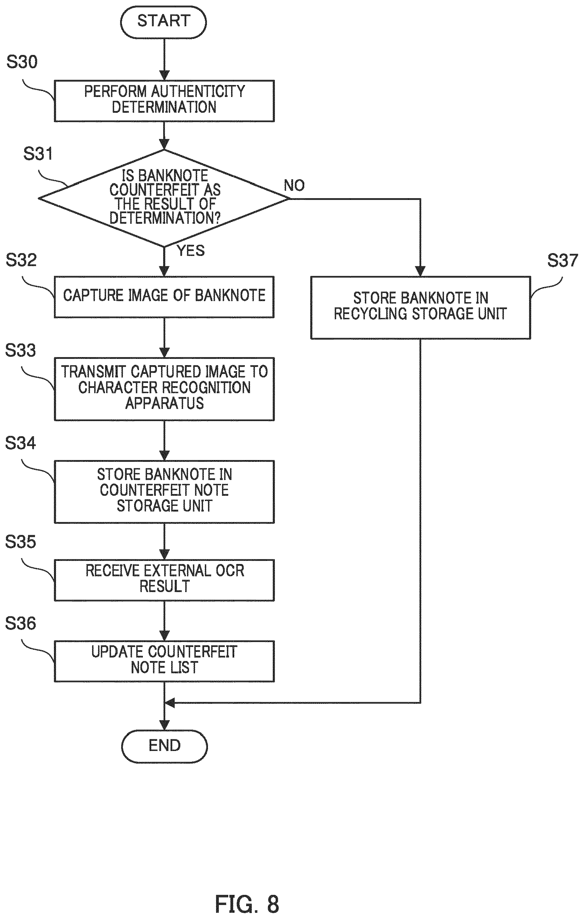

First, deposit processing will be described as an operation of the banknote processing system. FIG. 8 is a flowchart illustrating deposit processing of the banknote processing system according to Embodiment 3.

First, a banknote placed on the deposit unit 121 of the banknote processing apparatus 10B is transported by the transport unit 140 in the clockwise direction in FIG. 5 along the first transport path 411. As illustrated in FIG. 8, the recognition section 130B determines the authenticity of the banknote transported to the recognition unit 125B before the imaging section 131B captures the image of the banknote (step S30). The control section 128B determines whether or not the banknote is counterfeit as the result of determination in the recognition section 130B (step S31).

When the banknote is determined to be counterfeit as the result of determination (step S31: YES), the imaging section 131B captures the image of the banknote that is determined to be counterfeit and acquires the image information thereof (step S32). The control section 128B generates a captured image by using the image information acquired by the imaging section 131B. After that, the transmission/reception section 126 transmits the captured image to the character recognition apparatus 9B (step S33). In the processing of step S33, the transmission/reception section 126 also transmits transaction specific information generated by the control section 128B to the character recognition apparatus 9B. The transaction specific information includes the transaction date and time of the banknote (the date and time when the banknote was transported into the banknote processing apparatus 10B) and a transaction number unique to the banknote. By transmitting the transaction specific information along with the captured image to the character recognition apparatus 9B in this manner, the transmission/reception section 126 can receive the captured image and the transaction specific information along with the external OCR result from the character recognition apparatus 9B as described below. Therefore, the control section 128B can update the counterfeit note list 61 simply by associating the pieces of information received by the transmission/reception section 126 to each other and storing the information in the memory section 127.

The transport unit 140 stores the banknote, which is determined to be counterfeit, in the counterfeit note storage unit S3 before or after the processing of steps S32 and S33, or during execution of the processing (step S34). In other words, a banknote determined to be counterfeit cannot be recycled.

When the character recognition apparatus 9B receives the transaction specific information and the captured image from the banknote processing apparatus 10B, the character recognition apparatus 9B performs external OCR by using the captured image, associates the transaction specific information, the captured image, and the external OCR result and transmits the associated data to the banknote processing apparatus 10B.

The transmission/reception section 126 of the banknote processing apparatus 10B receives the transaction specific information, the captured image, and the external OCR result from the character recognition apparatus 9B (step S35). After that, the control section 128B performs the processing of updating the counterfeit note list 61 (step S36) as follows: the processing of associating the transaction date and time 614 and the transaction number 615 of the received transaction specific information, the captured image 612, and the external OCR result 613, and adding the associated data to the counterfeit note list 61 in the memory section 127.

On the other hand, when a banknote is determined to be genuine as the result of determination (step S31: NO), the transport unit 140 stores the banknote, which is determined to be genuine and thus is not suspected to be counterfeit, in one of the recycling storage units S, the first recycling storage units S 1, and the second recycling storage units S2 based on the denomination recognized by the recognition section 130B (step S37).

### Processing of Printing Receipt

In the following, processing of printing a receipt as the operation of the banknote processing system will be described

For example, when a person in charge of collection and delivery operates the operation display 132 to instruct the issuance of a receipt during the collection process of banknotes from the first to sixth storage devices 531 to 536, the printing unit 133 of the banknote processing apparatus 10B prints a receipt 71 as illustrated in FIG. 8 by using the counterfeit note list 61. After the receipt 71 is printed, the control section 128B may delete the information related to the counterfeit note printed on the receipt 71 from the counterfeit note list 61.

### Effects of Embodiment 3

Embodiment 3 has the following effects in addition to the same effects as those of Embodiment 1. The banknote processing apparatus 10B causes the character recognition apparatus 9B to identify the serial number of a banknote determined to be counterfeit in the authenticity determination, and stores the external OCR result 613 in the memory section 127. Therefore, for example, a person in charge of collection and delivery can easily specify a banknote that is suspected to be counterfeit based on the serial number identified with high accuracy, as compared to when character recognition is performed within the banknote processing apparatus 10B. Further, the external OCR result 613 and transaction specific information 611 are associated and stored in memory section 127. Therefore, by printing such information as the receipt 71, the person in charge of collection and delivery can specify the person who used the banknote suspected to be counterfeit, with the use of information such as a surveillance camera image and its shooting date and time.

### Variation of Embodiment 3

External OCR may also be performed on a banknote that is determined to be genuine in the authenticity determination. In this case, control section 128B may generate a serial number list in which the serial numbers of banknotes stored in the recycling storage units S, the first recycling storage units S1, and the second recycling storage units S2 are associated with the storage order based on the external OCR results, and may store the list in memory section 127. With such a configuration, the control section 128B can generate a serial number list in which more accurate serial numbers are recorded, based on the serial numbers identified with high accuracy.

### Embodiment 4

In the following, Embodiment 4 will be described with reference to the drawings.

### Configuration of Banknote Processing System

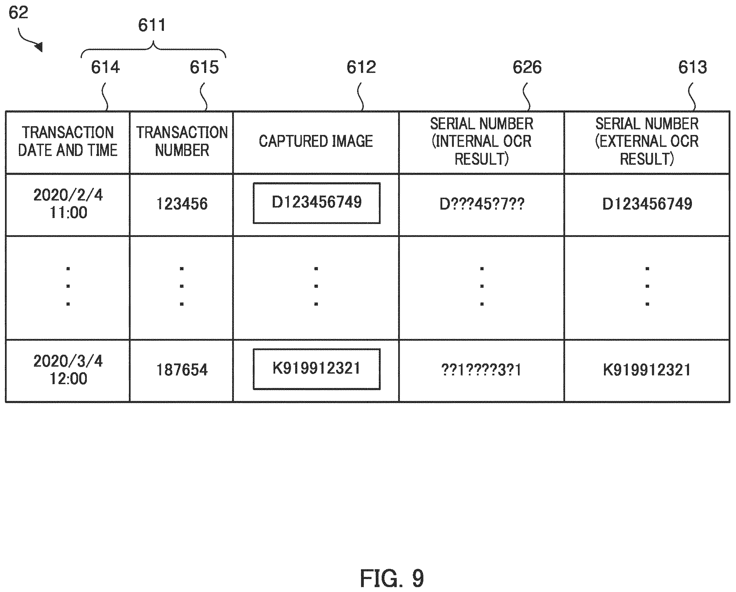

First, the configuration of the banknote processing system will be described based on FIGS. 5 and 9. FIG. 9 is a schematic diagram illustrating a schematic configuration of a counterfeit note list according to Embodiment 4.

A banknote processing system 1C illustrated in FIG. 5 comprises a banknote processing apparatus 10C and a character recognition apparatus 9C. The banknote processing system 1C uses the banknote processing apparatus 10C to perform internal OCR of a banknote deposited in the banknote processing apparatus 10C, and uses a character recognition apparatus 9C to perform external OCR on a banknote whose character recognition rate in the internal OCR is less than a threshold value. The reason why the character recognition rate becomes less than the threshold value is, for example, as follows: the banknote on which internal OCR is performed is a counterfeit note whose serial number size, font, position and/or the like differs from the predetermined specifications; or the banknote is a genuine banknote that is dirty or bent so that the serial number cannot be read properly. In Embodiment 4, authenticity determination as in Embodiment 3 is not performed; thus a banknote whose character recognition rate in internal OCR is less than a threshold value is stored in the counterfeit note storage unit S3 as a banknote suspected to be counterfeit regardless of whether the banknote is actually counterfeit or not. Then, the banknote processing system 1C uses the banknote processing apparatus 10B to perform the processing related to the banknote using an external OCR result.

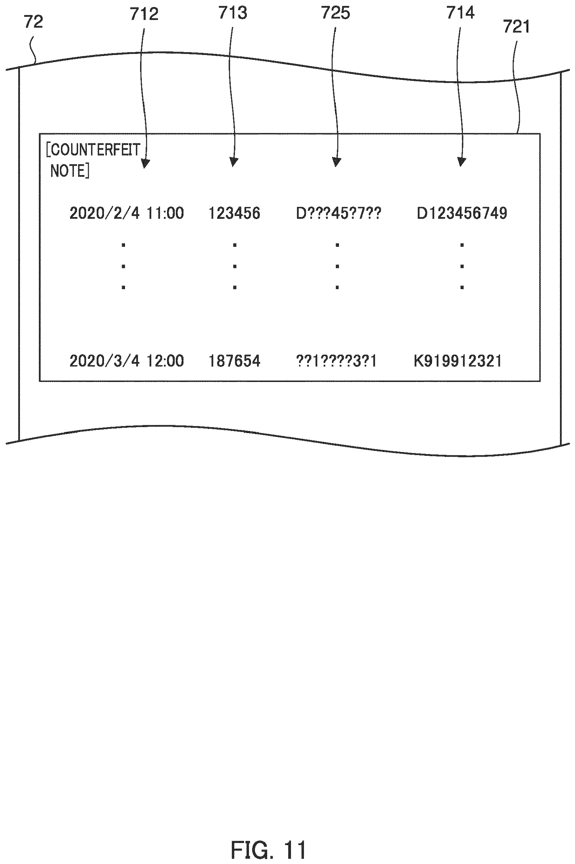

A recognition unit 125C, a control section 128C, a counterfeit note list 62, and a receipt 72 (see FIG. 11) relative to the banknote processing apparatus 10C differ from the recognition unit 125B, the control section 128B, the counterfeit note list 61, and the receipt 71 relative to the banknote processing apparatus 10B. The rest of the configuration of the banknote processing apparatus 10C is the same as that of the banknote processing apparatus 10B.

The recognition unit 125C comprises an imaging section 131C and a recognition section 130C both disposed on the first transport path 411.

Under the control of the control section 128C, the imaging section 131C captures the image of a banknote transported along the first transport path 411, and acquires image information indicating a reflected image of one side of the banknote.

The recognition section 130C has a function as a character recognition unit that performs internal OCR by using the image information acquired by the imaging section 131C. The recognition section 130C recognizes the denomination and fitness of a banknote by using a well-known method. The recognition section 130C transmits the internal OCR result, denomination and fitness recognition results to a control section 128C.

The memory section 127 stores the counterfeit note list 62 illustrated in FIG. 9. In the counterfeit note list 62, transaction specific information 611 of banknotes stored in the counterfeit note storage unit S3, captured images 612, internal OCR results 626 and external OCR results 613 are associated with each other. The counterfeit note list 62 is generated by the control section 128C.

Specific processing of the control section 128C and the character recognition apparatus 9C will be described below.

### Operation of Banknote Processing System

In the following, the operation of the banknote processing system will be described. The same reference numerals are assigned to the same operations as in Embodiment 3, which will be briefly described.

### Deposit Processing

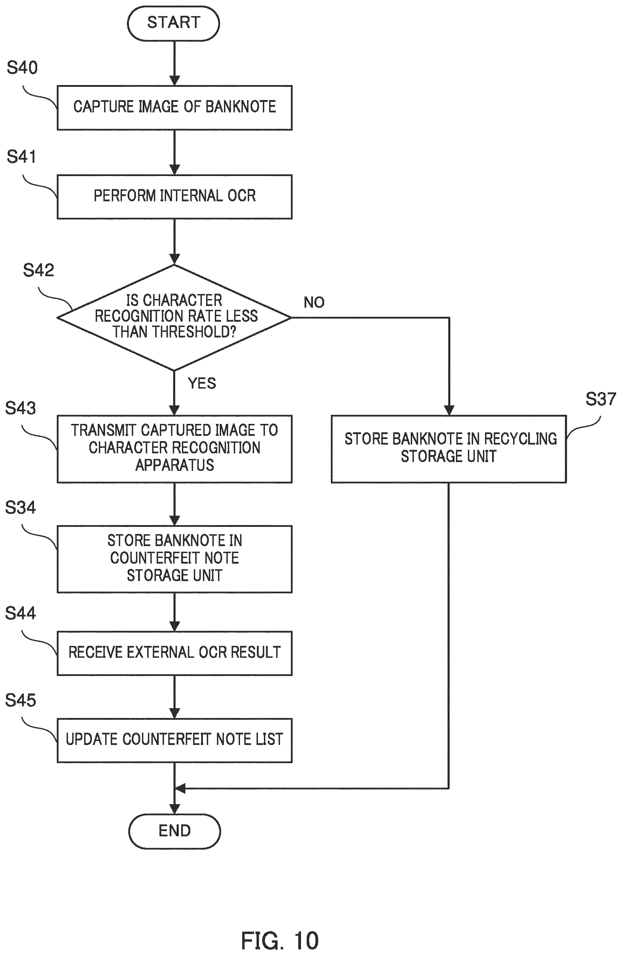

First, deposit processing will be described as an operation of the banknote processing system. FIG. 10 is a flowchart illustrating deposit processing of the banknote processing system according to Embodiment 4.

First, a banknote placed on the deposit unit 121 of the banknote processing apparatus 10C is transported in the clockwise direction in FIG. 5 along the first transport path 411. When the banknote is transported to the recognition unit 125C, the imaging section 131C captures the image of the banknote and acquires the image information thereof as illustrated in FIG. 10 (step S40). Next, the recognition section 130C uses the image information to perform internal OCR (step S41). The control section 128C determines whether the character recognition rate in internal OCR is less than a threshold (step S42). The character recognition rate may be a fixed value or may be any value set by a user. The threshold value may be set to 100%, and even when there is only one character that cannot be identified by the internal OCR, it may be determined that the character recognition rate is less than the threshold value.

When the control section 128C determines that the character recognition rate of a banknote is less than the threshold (step S42: YES), the control section 128C generates a captured image including a part where the serial number is written by using the image information. After that, the transmission/reception section 126 transmits the captured image to the character recognition apparatus 9C (step S43). In addition, in the processing of step S43, the transmission/reception section 126 also transmits the transaction specific information and the internal OCR result to the character recognition apparatus 9C. The transport unit 140 stores the banknote, whose character recognition rate is less than a threshold value, in the counterfeit note storage unit S3 before or after the processing of steps S42 and S43, or during execution of the processing (step S34). In other words, a banknote whose character recognition rate is less than a threshold value, thus is suspected to be counterfeit cannot be recycled.

When the character recognition apparatus 9C receives the transaction specific information, the captured image, and the internal OCR result from the banknote processing apparatus 10C, the character recognition apparatus 9C performs external OCR by using the captured image, associates the transaction specific information, the captured image, the internal OCR result, and the external OCR result, and transmits the associated data to the banknote processing apparatus 10C.

The banknote processing apparatus 10C receives the transaction specific information, the captured image, the internal OCR result, and the external OCR result from the character recognition apparatus 9C (step S44). After that, the control section 128C performs the processing of updating the counterfeit note list 62 (step S45) as follows: the processing of associating the transaction date and time 614 and the transaction number 615 of the received transaction specific information, the captured image 612, the internal OCR result 626, and the external OCR result 613, and adding the associated data to the counterfeit note list 62 in the memory section 127.

On the other hand, when a character recognition rate is determined to be equal to or more than a threshold (step S42: NO), the transport unit 140 stores the banknote, whose character recognition rate exceeds the threshold and thus is not suspected to be counterfeit, in one of the recycling storage units S, the first recycling storage units S1, and the second recycling storage units S2 based on the denomination recognized by the recognition section 130C (step S37). In addition, control section 128C may generate a serial number list in which the serial numbers of banknotes stored in the recycling storage units S, the first recycling storage units S1, and the second recycling storage units S2 are associated with the storage order based on the internal OCR results, and may store the list in memory section 127.

### Processing of Printing Receipt

In the following, processing of printing a receipt as the operation of the banknote processing system will be described. FIG. 11 is a schematic diagram illustrating an exemplary receipt according to Embodiment 4.

For example, when a person in charge of collection and delivery operates the operation display 132 to instruct the issuance of a receipt during the collection process of banknotes from the first to sixth storage devices 531 to 536, the printing unit 133 of the banknote processing apparatus 10C prints a receipt 72 as illustrated in FIG. 11. On the receipt 72, collected banknote information, and counterfeit note information 721 are written. The counterfeit note information 721 includes transaction date and time 712, a transaction number 713, an internal OCR result 725, and an external OCR result 714 respectively correspond to the transaction date and time 614, the transaction number 615, the internal OCR result 626, and the external OCR result 613 of counterfeit note list 62. After the receipt 72 is printed, the control section 128C may delete the information related to the counterfeit note printed on the receipt 72 from the counterfeit note list 62.

### Effects of Embodiment 4

Embodiment 4 has the following effects in addition to the same effects as those of Embodiment 1. The banknote processing apparatus 10C causes the character recognition apparatus 9C to identify the serial number of a banknote whose character recognition rate in internal OCR is less than a threshold value, and stores the external OCR result 613 in the memory section 127. Therefore, as described above, a person in charge of collection and delivery can easily specify a banknote that has a low character recognition rate in the internal OCR thus can be regarded as a counterfeit note, based on the serial number identified with high accuracy. Further, the external OCR result 613 and transaction specific information 611 are associated and stored in memory section 127. Therefore, by printing such information as the receipt 72, the person in charge of collection and delivery can specify the person who used the banknote, which can be regarded as a counterfeit note, with the use of information such as a surveillance camera image and its shooting date and time.

### Variation of Embodiment 4

External OCR may also be performed on a banknote whose character recognition rate in the internal OCR is equal to or more than the threshold, and the external OCR result may be transmitted to the banknote processing apparatus 10C. With such a configuration, the banknote processing system 1C can more accurately identify the serial number of a banknote whose character recognition rate in the internal OCR is slightly higher than the threshold, based on the external OCR result. In this case, the character recognition apparatus 9C may correct the internal OCR result to the contents of the external OCR result and transmit the corrected OCR result to the banknote processing apparatus 10C. In addition, the control section 128C may generate a serial number list by using the corrected OCR result transmitted from the character recognition apparatus 9C.

### Embodiment 5

In the following, Embodiment 5 will be described with reference to the drawings.

### Configuration of Banknote Processing System

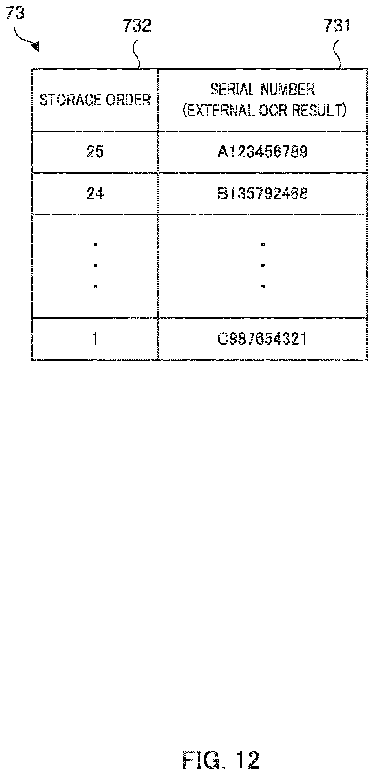

First, the configuration of the banknote processing system will be described based on FIGS. 5 and 12. FIG. 12 is a schematic diagram illustrating a schematic configuration of a serial number list according to Embodiment 5.

A banknote processing system 1D illustrated in FIG. 5 comprises a banknote processing apparatus 10D and a character recognition apparatus 9D. The banknote processing system 1D uses an external OCR result for performing deposit processing in the banknote processing apparatus 10C, and uses an internal OCR result for performing reconciliation processing. The reconciliation processing is processing of confirming the inventory amount of banknotes in each recycling storage unit by recognizing the banknotes stored in each recycling storage unit by the recognition section 130D.

The banknote processing apparatus 10D comprises an recognition unit 125D and a control section 128D that are different from the recognition unit 125B and control section 128B of the banknote processing apparatus 10B. The rest of the configuration of the banknote processing apparatus 10D is the same as that of the banknote processing apparatus 10B. Banknote processing apparatus 10D also differs from banknote processing apparatus 10B in that a serial number list 73 illustrated in FIG. 12 is stored in memory section 127.

The recognition unit 125D comprises a recognition section 130D and an imaging section 131D both disposed on the first transport path 411.

For performing deposit processing by the banknote processing apparatus 10D, the recognition section 130D functions as an authenticity determination unit for determining the authenticity of a banknote transported in the clockwise direction along the first transport path 411 by detecting the security portion of the banknote with a sensor (not illustrated), and also recognizes the denomination and fitness of a banknote by using a well-known method. The recognition section 130D transmits the authenticity determination result, denomination and fitness recognition results to the control section 128D. When the deposit processing is performed, the imaging section 131D does not capture the image of a banknote transported along the first transport path 411. A transmission image of a banknote may be acquired in the imaging section 131D, and authenticity may be determined in the recognition section 130D based on the presence or absence of a watermark on the banknote in the transmission image.

On the other hand, for performing reconciliation processing by the banknote processing apparatus 10D, the imaging section 131D captures the image of a banknote transported in the counterclockwise direction along the first transport path 411 and acquires the image information thereof, under the control of the control section 128D. When the reconciliation processing is performed, the recognition section 130D functions as a character recognition unit that performs internal OCR by using the image information of the reflected image acquired by the imaging section 131D. The recognition section 130D transmits the internal OCR result to the control section 128D.

The memory section 127 stores the serial number list 73 illustrated in FIG. 12. The serial number list 73 is generated by the control section 128D. In the serial number list 73, the serial numbers 731 of the banknotes stored in the recycling storage units S, the first recycling storage units S 1, and the second recycling storage units S2 are associated with the storage order 732. The serial number 731 represents the result of external OCR in the character recognition apparatus 9D. The storage order 732 represents the order of storage in the recycling storage units.

Specific processing of the control section 128D and the character recognition apparatus 9D will be described below.

### Operation of Banknote Processing System

In the following, the operation of the banknote processing system will be described. The same reference numerals are assigned to the same operations as in Embodiment 3, which will be briefly described. In addition, the banknote processing apparatus 10D of Embodiment 5 can perform processing of printing a receipt in the same manner as the banknote processing apparatus 10B of Embodiment 3, but a description thereof will be omitted.

### Deposit Processing

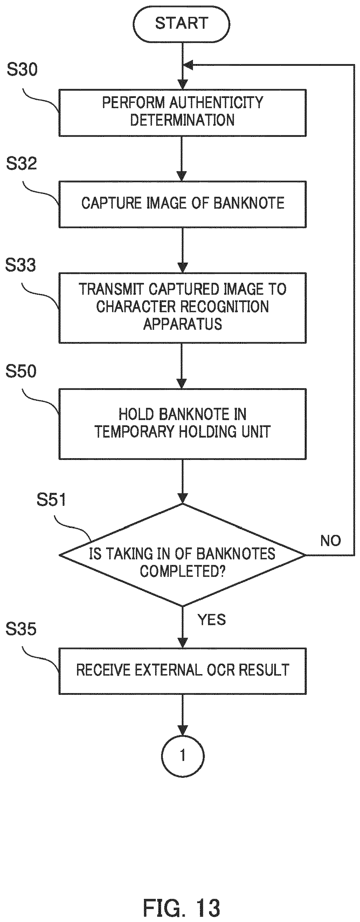

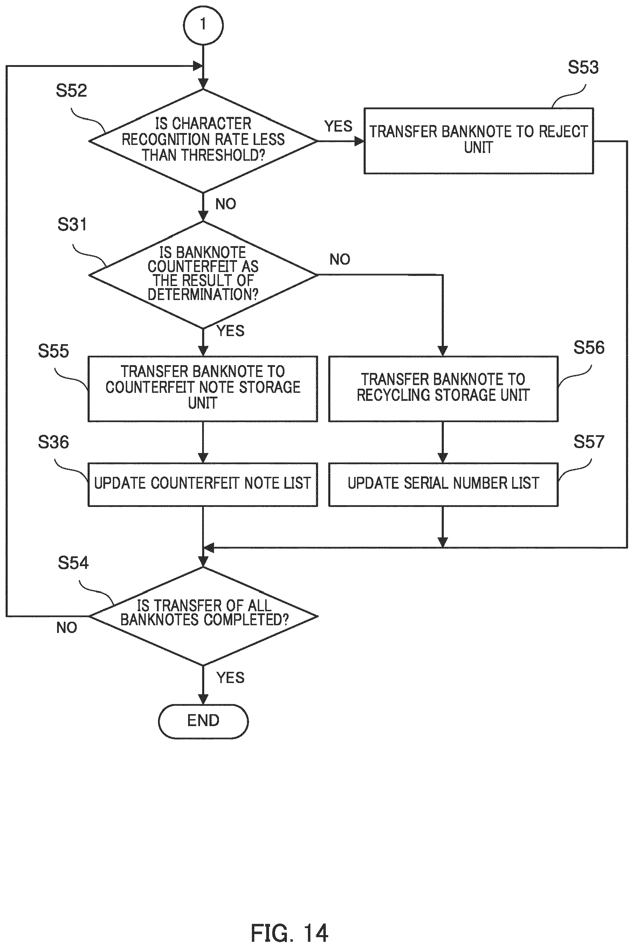

First, deposit processing will be described as an operation of the banknote processing system. FIGS. 13 and 14 are flowcharts illustrating deposit processing of the banknote processing system according to Embodiment 5.

First, when an operator places a banknote on the deposit unit 121 and operates the operation display 132 to instruct the deposit processing, the control section 128D receives an instruction to select an external OCR result, and uses the external OCR result to perform processing related to the banknote. The banknote placed on the deposit unit 121 of the banknote processing apparatus 10D is transported in the clockwise direction in FIG. 5 along the first transport path 411. When the banknote is transported to the recognition unit 125D, the recognition section 130D performs authenticity determination of the banknote, as illustrated in FIG. 13 (step S30). Next, the imaging section 131D captures the image of the banknote and acquires the image information thereof (step S32). After that, the transmission/reception section 126 transmits the captured image and the transaction specific information to the character recognition apparatus 9D (step S33). The character recognition apparatus 9D that has received the captured image and the transaction specific information performs external OCR by using the captured image.

The transport unit 140 allows the banknote to be held in the temporary holding unit 124 before or after the processing of step S33 or during execution of the processing (step S50). After that, the control section 128D determines whether taking in of all banknotes placed on the deposit unit 121 is finished (i.e., all banknotes placed on the deposit unit 121 have been taken in) (step S51). When the control section 128D determines that taking in of all banknotes is not finished (step S51: NO), the recognition section 130D performs authenticity determination of a next banknote transported to the recognition unit 125D (step S30). On the other hand, when control section 128D determines that taking in of all banknotes is finished (step S51: YES), the transmission/reception section 126 receives the transaction specific information, captured images, and external OCR results of all banknotes from the character recognition apparatus 9D (step S35).

That is, in the processing of steps S30, S32, S33, S50, S51, and S35, the banknote processing apparatus 10D repeats the following operation until there are no banknotes to be deposited while continuously transporting banknotes to be deposited: performing authenticity determination of each banknote and capturing the image of the banknote, and transmitting the captured image and the transaction specific information to the character recognition apparatus 9D; and at the same time, temporarily holding each banknote in the temporary holding unit 124. Then, while all banknotes to be deposited are temporarily held in the temporary holding unit 124, the transaction specific information, captured images, and external OCR results are received from the character recognition apparatus 9D. In the processing of step S35, the transmission of the external OCR results and the like from the character recognition apparatus 9D to the banknote processing apparatus 10D may be performed after the character recognition apparatus 9D receives, from the banknote processing apparatus 10D, information indicating that taking in of all banknotes is finished, may be performed as soon as the external OCR of all banknotes is finished, or may be performed every time the external OCR of each banknote is finished.

Next, as illustrated in FIG. 14, the control section 128D determines whether or not the character recognition rate in the external OCR of a banknote that is first fed out from the temporary holding unit 124 is less than a threshold (step S52). The character recognition rate may be a fixed value or may be any value set by a user. The threshold value may be set to 100%, and even when there is only one character that cannot be identified by the external OCR, it may be determined that the character recognition rate is less than the threshold value.

When it is determined in control section 128D that the character recognition rate of a banknote is less than the threshold (step S52: YES), the transport unit 140 transfers the banknote from the temporary holding unit 124 to the reject unit 123 under the control of the control section 128D (step S53). The reason why the banknote whose character recognition rate in external OCR is less than the threshold value is transferred to the reject unit 123 is as follows: when the banknote is stored in the counterfeit note storage unit S3, it becomes difficult to associate the serial number of the banknote with the transaction date and time of the banknote, and there is a possibility that the person who used the banknote cannot be specified. In addition, when the banknote transferred to the reject unit 123 is determined to be counterfeit, the banknote processing apparatus 10D may stop operating while announcing the fact by sound or display to call the administrator of the banknote processing apparatus 10D.

After the processing of step S53, the control section 128D determines whether the transfer of all banknotes held in the temporary holding unit 124 is completed (step S54). When the control section 128D determines that the transfer of all banknotes is completed (step S54: YES), the control section 128D ends the deposit processing. On the other hand, when the control section 128D determines that the transfer of all banknotes is not completed (step S54: NO), control section 128D performs the processing of step S52. In other words, the control section 128D determines whether the character recognition rate in the external OCR of a next banknote fed out from the temporary storage unit 124 is less than the threshold value.

On the other hand, when the control section 128D determines that the character recognition rate of a banknote in the external OCR is equal to or more than the threshold value (step S52: NO), control section 128D determines whether or not the banknote, whose character recognition rate is equal to or more than the threshold value, is counterfeit as the result of the authenticity determination (step S31). When it is determined in control section 128D that the banknote is counterfeit as the result of the authenticity determination (step S31: YES), the transport unit 140 transfers the banknote from the temporary holding unit 124 to the counterfeit note storage unit S3 (step S55). After that, the control section 128D performs the processing of updating the counterfeit note list 61 illustrated in FIG. 6 (step S36) as follows: adding information related to the banknote transferred to the counterfeit note storage unit S3 to the counterfeit note list 61. When the control section 128D performs the processing of step S54 and determines that the transfer of all banknotes is completed (step S54: YES), the control section 128D ends the deposit processing. On the other hand, when the control section 128D determines that the transfer of all banknotes is not completed (step S54: NO), control section 128D performs the processing of step S52.

On the other hand, when it is determined in control section 128D that the banknote is genuine as the result of the authenticity determination (step S31: NO), the transport unit 140 transfers the banknote from the temporary holding unit 124 to one of the recycling storage units S, the first recycling storage units S 1, and the second recycling storage units S2 based on the denomination (step S56). After that, the control section 128D performs the processing of updating the serial number list 73 (step S57) as follows: adding information having the external OCR result of the banknote transferred to the recycling storage unit as the serial number 731 to the serial number list 73. When the control section 128D performs the processing of step S54 and determines that the transfer of all banknotes is completed (step S54: YES), the control section 128D ends the deposit processing. On the other hand, when the control section 128D determines that the transfer of all banknotes is not completed (step S54: NO), control section 128D performs the processing of step S52.

That is, in the processing of steps S52 to S57, S31, and S36, the banknote processing apparatus 10D repeats the following operation until there are no banknotes held in the temporary holding unit 124 while continuously transporting the banknotes held in the temporary holding unit 124: based on the external OCR result and authenticity determination result for each banknote, transferring the banknote to one of the reject unit 123, the counterfeit note storage unit S3, and the recycling storage units.

### Reconciliation Processing

In the following, reconciliation processing as the operation of the banknote processing system will be described. Embodiment 5 also describes a reconciliation processing performed when the inventory amount in a recycling storage unit cannot be determined in the case of, for example, when the operation of the banknote processing apparatus 10D is stopped due to a power failure or the like.

First, when an operator operates the operation display 132 to instruct the reconciliation processing, the control section 128D receives an instruction to select an internal OCR result, and uses the internal OCR result to perform processing related to the banknote. The transport unit 140 transports a banknote fed out from the recycling storage unit to be subjected to reconciliation along the first transport path 411 in the counterclockwise direction in FIG. 5 and stores the banknote in, for example, temporary holding unit 124. As the banknote passes through the recognition unit 125D, the imaging section 131D captures the image of the banknote and acquires the image information thereof. The recognition section 130D performs internal OCR by using the image information acquired by the imaging section 131D. The control section 128D collates the serial number 731 of the serial number list 73 of the recycling storage unit to be subjected to reconciliation with the internal OCR results, and specifies the storage order of the banknotes to be subjected to reconciliation in the recycling storage unit, thereby determining the inventory amount. Although the internal OCR has lower accuracy than the external OCR, the external OCR result is recorded as the serial number 731 in the serial number list 73 to be collated in the processing of step S57 of the deposit processing. Therefore, even when some characters cannot be identified by the internal OCR, the serial number 731 corresponding to the internal OCR result can be searched from the serial number list 73. A storage order 732 associated with the searched serial number 731 thus can be specified as the storage order of the banknotes to be subjected to reconciliation. Therefore, the reconciliation processing can be performed accurately. Thereafter, the transport unit 140 transports the banknote (held in the temporary holding unit 124) in the clockwise direction in FIG. 5 along the first transport path 411, and transports the banknote to the original recycling storage unit.

### Effects of Embodiment 5

Embodiment 5 has the following effects in addition to the same effects as those of Embodiment 1. The banknote processing apparatus 10D transports banknotes according to the external OCR result in deposit processing in which processing accuracy is prioritized over processing speed. Therefore, the banknote processing apparatus 10D can appropriately transports a banknote based on the serial number identified with high accuracy. In particular, the external OCR can identify a serial number that cannot be identified by the internal OCR; therefore, the number of banknotes transferred to the reject unit 123 can be reduced.

The banknote processing apparatus 10D uses the internal OCR result to perform reconciliation processing in which processing speed is prioritized over processing accuracy. Therefore, compared with the case of performing the reconciliation processing by using the external OCR result, the reconciliation processing can be finished in a short period of time, thereby preventing the increase in downtime of the banknote processing apparatus 10D.

### Variation of Embodiment 5

During the deposit processing, the external OCR was performed on all banknotes to be deposited. However, the external OCR may be performed on a counterfeit note, for which it is sufficient when identification of its serial number can be obtained before collection of the counterfeit note. On the other hand, the internal OCR may be performed on a genuine note, which affects the user's waiting time, to obtain results faster than the external OCR.

### Other Variations

In Embodiments 3 to 5, the banknote processing apparatuses 10B to 10D do not necessarily transmit transaction specific information to the character recognition apparatuses 9B to 9D. In this case, when the character recognition apparatuses 9B to 9D transmit the external OCR results to the banknote processing apparatuses 10B to 10D in the order in which the captured images are received, the control sections 128B to 128D can associate transaction specific information 611 and external OCR results 613 and add the associated data to the counterfeit note lists 61 and 62. In addition, in Embodiment 4, the banknote processing apparatus 10C does not necessarily transmit the internal OCR result to the character recognition apparatus 9C.

In Embodiments 3 to 5, the character recognition apparatuses 9B to 9D do not necessarily transmit captured images to the banknote processing apparatuses 10B to 10D. In addition, in Embodiment 4, the character recognition apparatus 9C does not necessarily transmit the internal OCR result to the banknote processing apparatus 10C.

In Embodiments 3 to 5, the counterfeit note lists 61 and 62 do not necessarily include at least one of the captured image 612 and the transaction number 615. In addition, in Embodiment 4, the counterfeit note list 62 does not necessarily include the internal OCR result 626.

In Embodiments 3 to 5, the receipts 71 and 72 do not necessarily include the transaction number 713. In addition, in Embodiment 4, the receipt 72 does not necessarily include the internal OCR result 725.

In Embodiments 3 to 5, the operation display 132 may display the information written on the receipt 71 or 72.

In Embodiment 5, the following configuration is possible: a collection unit is provided in the banknote processing apparatus 10D, and when it is determined in step S52 that the character recognition rate of a banknote by the external OCR is less than a threshold value, the banknote is transferred to the collection unit.

Voucher and checks may be applied as the sheets to be processed by the sheet processing apparatus of the present disclosure.

This application is entitled to the benefit of Japanese Patent Application No. 2021-077858, filed on April 30, 2021, the disclosure of which including the specification, drawings and abstract is incorporated herein by reference in its entirety.

## Claims

1. A sheet processing method performed in a sheet processing apparatus, the method comprising:
acquiring image information of a sheet;
transmitting the acquired image information to a character recognition apparatus outside the sheet processing apparatus, and receiving a result of character recognition performed by the character recognition apparatus from the character recognition apparatus; and
performing processing on the sheet by using the result of the character recognition performed by the character recognition apparatus.

2. The sheet processing method according to claim 1, further comprising:
performing a character recognition in the sheet processing apparatus by using the image information, wherein the processing on the sheet is performed by using a result of the character recognition performed by the sheet processing apparatus.

3. The sheet processing method according to claim 1 or 2, further comprising:
performing authenticity determination on the sheet, wherein
when the sheet is determined to be counterfeit as a result of the authenticity determination, the processing on the sheet is performed by using the result of the character recognition performed by the character recognition apparatus.

4. The sheet processing method according to claim 3, further comprising:
when the sheet is determined to be counterfeit as the result of the authenticity determination:
storing the sheet in a counterfeit note storage unit; and
generating transaction specific information of the sheet, associating the transaction specific information generated and the result of the character recognition acquired from the character recognition apparatus, and storing the transaction specific information and the result of the character recognition in a memory unit, the transaction specific information corresponding to the image information.

5. The sheet processing method according to claim 2, wherein:
when a character recognition rate of the character recognition in the sheet processing apparatus is less than a threshold, the processing on the sheet is performed by using the result of the character recognition performed by the character recognition apparatus; and
when the character recognition rate is equal to or more than the threshold, the processing on the sheet is performed by using the result of the character recognition performed by the sheet processing apparatus.

6. The sheet processing method according to claim 5, further comprising:
when the character recognition rate of the character recognition in the sheet processing apparatus is less than the threshold:
storing the sheet in a counterfeit note storage unit; and
generating transaction specific information of the sheet, associating the transaction specific information generated and the result of the character recognition acquired from the character recognition apparatus, and storing the transaction specific information and the result of the character recognition in a memory unit, the transaction specific information corresponding to the image information.

7. The sheet processing method according to claim 2, further comprising:
selecting one of the result of the character recognition performed by the sheet processing apparatus and the result of the character recognition performed by the character recognition apparatus, wherein the processing on the sheet is performed by using the result of the character recognition selected.

8. The sheet processing method according to claim 1 or 2, further comprising:
during performing of deposit processing,
transmitting the image information of the sheet to the character recognition apparatus, and transporting the sheet based on the result of the character recognition performed by the character recognition apparatus.

9. The sheet processing method according to claim 8, further comprising:
holding the sheet in a temporary holding unit;
when a character recognition rate of the character recognition apparatus is equal to or more than a threshold, transporting the sheet from the temporary holding unit to a recycling storage unit; and
when the character recognition rate is less than the threshold, transporting the sheet from the temporary holding unit to a collection unit or a reject unit.

10. The sheet processing method according to claim 8 or 9, further comprising:
during performing of reconciliation processing,
performing the character recognition of the sheet in the sheet processing apparatus, and collating the result of the character recognition performed by the sheet processing apparatus with the result of the character recognition performed by the character recognition apparatus during the deposit processing.

11. A sheet processing apparatus, comprising:
an imaging unit that acquires image information of a sheet;
a transmission/reception unit that transmits the acquired image information to a character recognition apparatus outside the sheet processing apparatus, and receives a result of character recognition performed by the character recognition apparatus from the character recognition apparatus; and
a control unit that performs processing on the sheet by using the result of the character recognition performed by the character recognition apparatus.

12. The sheet processing apparatus according to claim 11, further comprising:
a character recognition unit that performs the character recognition on the sheet, wherein
the control unit performs processing on the sheet by using a result of the character recognition performed by the character recognition unit by using the image information.

13. The sheet processing apparatus according to claim 11 or 12, further comprising:
an authenticity determination unit that performs authenticity determination of the sheet, wherein
when the sheet is determined to be counterfeit as a result of the authenticity determination of the authenticity determination unit, the control unit performs the processing on the sheet by using the result of the character recognition performed by the character recognition apparatus.

14. The sheet processing apparatus according to claim 12, wherein
when a character recognition rate of the character recognition unit is less than a threshold, the control unit performs the processing on the sheet by using the result of the character recognition performed by the character recognition apparatus.

15. The sheet processing apparatus according to claim 12, wherein
the control unit receives an instruction to select the result of the character recognition performed by the character recognition unit or an instruction to select the result of the character recognition performed by the character recognition apparatus, and performs the processing by using the result based on the instruction received.
